# EUROPÄISCHE PATENTSCHRIFT

(11) **EP 1 366 341 B1**
(45) Veröffentlichungstag und Bekanntmachung des Hinweises auf die Patenterteilung: **12.10.2005**
(21) Anmeldenummer: 02729957.7
(22) Anmeldetag: 05.03.2002
(51) Int. Cl.: G01F 1/66, B06B 1/06

(54) **WANDLER FÜR ULTRASCHALL-DURCHFLUSSMESSER**
CONVERTER FOR ULTRASOUND FLOWMETER
TRANSDUCTEUR POUR DEBITMETRE A ULTRASONS

(30) Priorität: 07.03.2001 CH 423012001
(43) Veröffentlichungstag der Anmeldung: 03.12.2003
(73) Patentinhaber: M & FC Holding LLC, Raleigh, NC 27 615 (US)
(72) Erfinder: BREMER, Henning, 30890 Barsinghausen (DE)
(74) Vertreter: Patentanwälte Möll und Bitterich
(86) Internationale Anmeldenummer: PCT/EP2002/002364
(87) Internationale Veröffentlichungsnummer: WO 2002/071003

(56) Entgegenhaltungen:
- EP-A- 0 606 536
- DE-A- 19 725 717
- US-A- 3 708 702
- US-A- 4 705 981

## Beschreibung

### Technisches Gebiet:

Die Erfindung bezieht sich auf Wandler gemäß dem Oberbegriff des Anspruchs 1 für Ultraschall-Durchflussmesser, die zum Erfassen der Strömungsgeschwindigkeit bzw. der Durchftussmenge eines flüssigen oder gasförmigen Mediums verwendet werden.

### Stand der Technik

Ein Wandler der im Oberbegriff des Anspruchs 1 genannten Art ist aus DE-A1-197 25 717 bekannt. Hier wird auf Membranen, die in der Regel dünne Stahlfolien sind, verzichtet. Die dem Medium zugekehrte Elektrode des Piezoelements ist allseits überstehend ausgebildet und unter einem O-Ring gehalten. Die Elektrode ist auf das Piezoelement aufgeklebt. Um schädliche Wirkungen des Mediums auf diese Elektrode zu verhindern, muss die Elektrode selbst aus einem korrosionsbeständigem Werkstoff bestehen. Nachteilig ist sicherlich, dass die Elektrode keinen unmittelbaren Kontakt zur Oberfläche des Piezoelements hat, denn durch die dazwischen liegende Klebstoffschicht ist der Wirkungsgrad beim Senden und Empfangen von Ultraschallwellen wegen der durch die Klebstoffschicht verursachten Dämpfung nicht optimal. Solche Klebstoffschichten können zudem altern, so dass sich das Schwingungsverhalten im Laufe der Zeit nachteilig verändert. Dies insbesondere dann, wenn der Ultraschall-Durchflussmesser Teil eines Wärmemengenzählers ist, bei dem das Medium erhöhte Temperaturen von etwa 80 °C bis 130 °C haben kann. Nachteilig ist weiter der Aufwand, der dadurch entsteht, dass die Elektrode auf das Piezoelement aufgeklebt werden muss.

Ein anderer Wandler ist aus der EP-B1-0 606 536 bekannt. Dessen Piezoelemente sind in Gehäusen angeordnet, die gegen die vom Medium durchflossene Messstrecke durch Membranen abgeschlossen sind. Dies dient dem Zweck, die Piezoelemente gegen die schädlichen, z.B. korrosiven Einflüsse des Mediums zu schützen.

Ein weiterer Wandler dieser Art ist aus der US 4 705 981 bekannt. Auch hier ist das Piezoelement gegen das Medium durch eine Membran geschützt. Gemäß einer der Ausführungsformen ist diese Membran zwischen zwei O-Ringen in einem Gehäuse eingespannt.

Die Herstellung von Wandlern der vorgenannten Ausführungsformen ist aufwändig. Das betrifft die Herstellung der Piezoelemente selbst sowie die Montage der Einzelteile zu einem gebrauchsfertigen Wandler.

### Darstellung der Erfindung

Der Erfindung liegt die Aufgabe zugrunde, Wandler für Ultraschall-Durchflussmesser zu schaffen, die einen hohen elektro-akustischen Wirkungsgrad haben, einfach aufgebaut sind und somit auch einfach herstellbar und montierbar sind.

Die genannte Aufgabe wird erfindungsgemäß gelöst durch einen Wandler mit den Merkmalen des Anspruchs 1.

Vorteilhafte Weiterbildungen ergeben sich aus den abhängigen Ansprüchen in Verbindung mit den Ausführungsbeispielen und den Zeichnungen.

### Kurze Beschreibung der Zeichnungen

Nachfolgend werden Ausführungsbeispiele der Erfindung anhand der Zeichnungen näher erläutert. Es zeigen:
- Fig. 1: einen schematischen Schnitt eines in ein Wandlergehäuse eingebauten Wandlerelements,
- Fig. 2: ein unmaßstäbliches Schema des Aufbaus eines Wandlerelements in einer Schnittdarstellung und
- Fig. 3: eine weitere vorteilhafte Ausgestaltung.

### Wege zur Ausführung der Erfindung und gewerbliche Verwertbarkeit

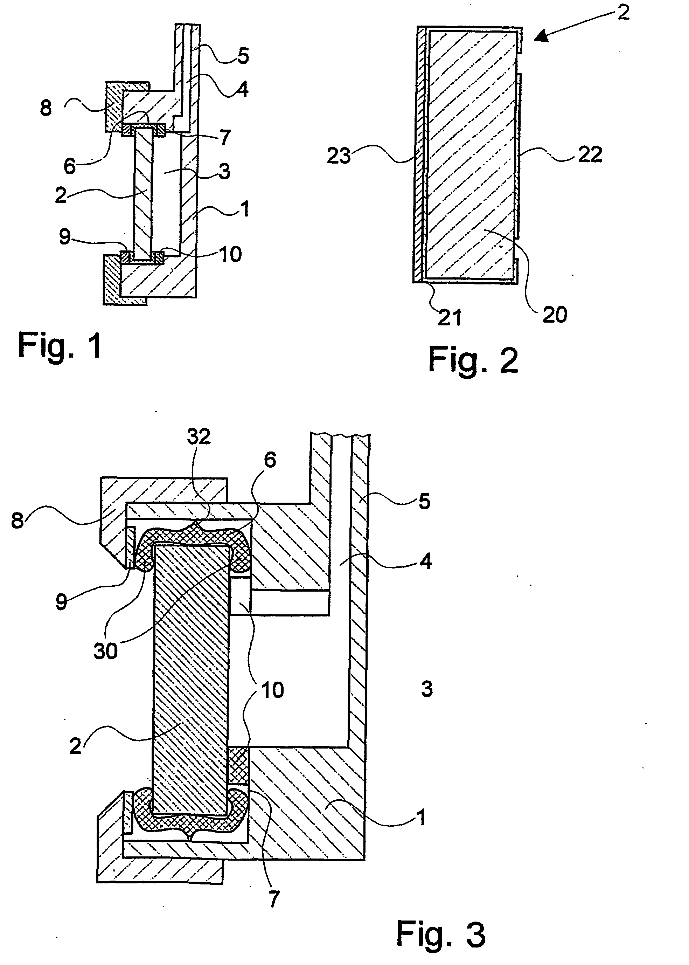

In der Fig. 1 ist ein Beispiel für ein in ein Wandlergehäuse 1 eingebautes Wandlerelement 2 gezeigt. Das Wandlergehäuse 1 weist einen Innenraum 3 auf, der zur Aufnahme des Wandlerelements 2 samt der zugehörigen Anschlussverbindungen bestimmt ist. In einem Kabelkanal 4 werden die Anschlussverbindungen in bekannter Weise nach außen geführt, wobei ein den Kabelkanal 4 umgebender Steg 5 der Verbindung des Wandlergehäuses 1 mit anderen Teilen der Messstrecke dient. Das Wandlerelement 2 ist an seiner Mantelfläche und an den äußeren Partien seiner Frontseite und Rückseite erfindungsgemäß von einer Formdichtung 6 umgeben. Diese Formdichtung 6 besteht aus einem gummielastischen Werkstoff.

Auf diese Weise steht die dem Medium zugekehrte Fläche des Wandlerelements 2 unmittelbar mit dem Medium in Kontakt. Weil sich also keine Membran und auch keine Klebschicht zwischen der Oberfläche des Wandlerelements 2 und dem Medium befindet, wird ein hoher elektro-akustischer Wirkungsgrad erreicht. Beispielsweise entfällt die dämpfende Wirkung der Klebschicht.

Der Innenraum 3 des Wandiergehäuses 1 besitzt vorteilhaft eine ringförmige Stufe 7, an der sich das Wandlerelement 2 über die Formdichtung 6 abstützt. Auf der anderen Seite wird das Wandlerelement 2 gehalten von einem Haltering 8, wobei auch hier die Formdichtung 6 zwischengeschaltet ist. Dabei kann der Haltering 8 mit dem Wandlergehäuse 1 verschraubbar sein, was eine besonders einfache Montage ermöglicht. Statt der Verschraubung kommen aber auch andere Verbindungsarten in Betracht. Beispielsweise kann der Haltering 8 auf das Wandlergehäuse 1 durch einen Presssitz aufpressbar sein. Durch die Formdichtung 6 in Verbindung mit der Gestaltung des Innenraums 3 des Wandlergehäuses 1 und mit dem Haltering 8 bedarf es keiner weiteren Einzelteile, um das Wandlerelement 2 im Wandlergehäuse 1 zu fixieren. Das bietet erfindungsgemäß erhebliche Vorteile hinsichtlich der Herstellungs- und Montagekosten. Weitere Ausführungsformen liegen im Rahmen des handwerklichen Könnens eines Konstrukteurs. So ist es beispielsweise vorteilhaft, dass dann, wenn der Haltering 8 aufschraubbar ist, vor dem Aufschrauben des Halterings 8 über die Formdichtung 6 ein Gleitring 9 gelegt wird, damit verhindert werden kann, dass sich beim Aufschraubens des Halterings 8 das Wandlerelement 2 im Wandlergehäuse 1 mitdreht. Vorteilhaft ist zwischen der Formdichtung 6 und der Stufe 7 ein Distanzring 10 angeordnet.

Gleitring 9 und Distanzring 10 bestehen vorteilhaft aus Polyaryletherketon. Durch die niedrige Gleitreibung dieses Werkstoffs wird erreicht, dass bei durch thermisch bedingte Maßänderungen keine Spannungen aufgebaut werden, die die Funktion des Wandlerelements 2 beeinträchtigen könnten. Solche Maßänderungen treten insbesondere dann zwangsläufig auf, wenn die Wandler bei Wärmemengenzählern verwendet werden, so sich die Temperatur des Mediums zwischen etwa 20 und 130 °C ändern kann. Die gummielastische Formdichtung 6 kann sich bei solchen Maßänderungen leicht verformen, bleibt aber formstabil.

In der Fig. 2 ist eine vorteilhafte Ausführung des Wandlerelements 2 im Detail dargestellt. Der Kern des Wandlerelements 2 besteht gemäß dem bekannten Stand der Technik aus einer Keramikscheibe 20 besteht. Auf diese Keramikscheibe 20 sind in bekannter Weise zwei Elektroden aufgebracht, eine Frontelektrode 21 und eine Rückenelektrode 22. Die Frontelektrode 21 ist dem Medium zugewandt. In ebenfalls bekannter Weise dehnt sich die Frontelektrode 21 von der Frontseite der Keramikscheibe 20 über deren Mantelfläche bis zur Rückseite aus und bildet dort einen Ring. Diese Anordnung hat den Vorteil, dass die Kontaktierung der beiden Elektroden 21, 22 auf der Rückseite erfolgen kann.

Vorteilhaft ist auf der dem Medium zugewandten Seite auf der Frontelektrode 21 eine Schutzschicht 23 aufgebracht. Diese Schutzschicht 23 ist vorteilhaft eine korrosionsbeständige Hartstoffschicht. Durch die Korrosionsbeständigkeit dieser Schutzschicht 23 kann das Wandlerelement 1 auf dieser Seite unmittelbar auch dann dem Medium ausgesetzt sein, wenn das Medium Brauch- oder Heizungswasser ist. Ein solcherart einfach aufgebauter Wandler kann also nicht nur dann verwendet werden, wenn das Medium ein Gas ist, sondern eben auch dann, wenn es sich um Wasser handelt. Auf eine Membran zum Schutz des Wandlerelements 2 vor dem Medium kann also verzichtet werden. Durch die Härte der Schutzschicht 23 wird darüber hinaus erreicht, dass das Wandlerelement 2 auch vor abrasiv wirkenden Partikeln, die durchaus im Medium mitgeführt sein können, sicher geschützt ist. Solche Ultraschall-Durchflussmesser werden beispielsweise zur Messung des Verbrauchs von Wasser benützt. Innerhalb von Versorgungsleitungen für die Wasserversorgung kommt es immer wieder vor, dass durch Bau- und Reparaturarbeiten beispielsweise Sand in die Versorgungsleitungen eindringt. Vom strömendem Medium mitgeführte Partikel können insbesondere dann stark abrasiv wirken, wenn die Strömungsgeschwindigkeit hoch ist. Die Schutzschicht 23 bietet auch davor einen zuverlässigen Schutz.

Vorteilhaft besteht die Schutzschicht 23 aus Titannitrid. Titannitrid ist sehr hart und bietet ausgezeichneten Schutz des Wandlerelements 2 gegen abrasiv wirkende Partikel. Titannitrid lässt sich nach verschiedenen Verfahren aufbringen. Beim Aufbringen der Schutzschicht 23 muss darauf geachtet werden, dass die Temperatur während der Prozesses die Curietemperatur der Keramikscheibe 20 nicht überschreitet.

Vorteilhaft wird dabei der Prozess des Aufbringens der Titannitrid-Schicht so gesteuert, dass die Schutzschicht 23 eine sogenannte geschlossene Struktur aufweist. Diese Struktur hat einen deutlich besseren Korrosionswiderstand als die sonst vielfach zur Anwendung kommende fraktale Struktur solcher Schichten.

Die Dicke der Schutzschicht 23 beträgt vorteilhaft 1 bis 5 µm. Die minimale Dicke von 1 µm reicht aus, um sowohl den Korrosionsschutz als auch den Schutz gegen Abrasion zu gewährleisten.

In der Fig. 3 ist eine besonders vorteilhafte Ausgestaltung gezeigt, wobei für gleiche Teile die gleichen Bezugszahlen verwendet sind wie in der Fig. 1. Die eine Besonderheit dieser vorteilhaften Ausgestaltung ist die Form der Formdichtung 6. Sie umgibt den Randbereich des Wandlerelements 2 und zeichnet sich dadurch aus, dass sie beidseits des Randbereichs des Wandlerelements 2 wulstförmige Verdickungen 30 aufweist. Die eine Verdickung 30 befindet sich im montierten Zustand zwischen dem Randbereich des Wandlerelements 2 und dem Gleitring 9, dichtet also einerseits zwischen dem Gleitring 9 und dem Wandlerelement 2 und andererseits an der Oberfläche des Randbereichs des Wandlerelements 2. Damit kann das Medium nicht in den Innenraum 3 des Wandlergehäuses 1 eindringen.

Die zweite Verdickung 30 der Formdichtung 6 befindet sich auf der gegenüberliegenden Seite des Wandlerelements 2 in dessen Randbereich. Hier dichtet sie zwischen der Stufe 7 im Inneren des Wandlergehäuses 1 und dem Wandlerelement 2. Durch diese weitere Abdichtung kann verhindert werden, dass Medium auf einem anderen Weg in den Innenraum 3 gelangt. Dieser mögliche andere Weg ist der folgende: Ist der Haltering 8 beispielsweise mit dem Wandlergehäuse 1 verschraubt, so kann nicht völlig ausgeschlossen werden, dass das Medium über das Gewinde eindringt. Die zweite Verdickung 30 bietet dann einen zuverlässigen Schutz, dass über das Gewinde eingedrungenes Medium in den Innenraum 3 gelangt. Ähnliche Verhältnisse liegen vor, wenn der Haltering 8 auf das Wandlergehäuse 1 aufgepresst ist.

Die Formdichtung 6 weist an ihrem äußeren Umfang zusätzlich in vorteilhafter Weise eine umlaufende Wulst 32 auf. Die Formdichtung 6 hat im Bereich der Wulst 32 einen Außendurchmesser, der annähernd gleich groß ist wie der Innendurchmesser des Wandlergehäuses 1 im Bereich der Position des Wandlerelements 2. Beim Einsetzen des Wandlerelements 2 mit der Formdichtung 6 besteht somit kein Spiel, was einerseits die Montage vereinfacht und andererseits eine eindeutige Lage des Wandlerelements 2 ergibt. Die Wulst 32 muss nicht notwendigerweise durchgehend sein, sondern kann aus einzelnen, in einer Reihe angeordneten Noppen bestehen.

In vorteilhafter Weise ist hier der Distanzring 10 unmittelbar zwischen dem Wandlerelement 2 und der Stufe 7 angeordnet. Der Distanzring 10 ist hier kein voller Ring, sondern weist einen Schlitz auf, was aus der Fig. 3 dadurch erkennbar ist, dass er einerseits unten im Schnitt und andererseits oben in einer Ansicht dargestellt ist. Das gilt auch für die Stufe 7. Diese Schlitze in Distanzring 10 und Stufe 7 schaffen den nötigen Raum, um die Kabel zu den nicht dargestellten Elektroden des Wandlerelements 2 aufzunehmen. Die Anordnung des Distanzrings 10 unmittelbar zwischen dem Wandlerelement 2 und der Stufe 7 steht im Gegensatz zur Lösung nach Fig. 1. Diese Anordnung hat einen besonderen Vorteil, denn die Lage des Wandlerelements 2 ist auch in Bezug auf die Ebene des Wandlerelements 2 gegenüber dem Wandlergehäuse 1 eindeutig definiert. Dies hat dann Bedeutung, wenn der Druck des Mediums Schwankungen unterworfen ist. Ändert sich der Druck des Mediums, so ändert sich die Anpresskraft auf die Formdichtung, was zur Folge hat, dass sich die Lage des Wandlerelements 2 gegenüber dem Wandlergehäuse 1 ändert. Steigt der Druck, so würde die Kraft auf die zwischen Stufe 7 und Wandlerelement 2 liegende Verdickung 30 steigen, was zur Folge hätte, dass die Verdickung 30 sich verformt und das Wandlerelement 2 etwas näher an die Stufe 7 gedrückt wird. Daraus würde folgen, dass sich die Distanz zwischen den beiden Wandlerelementen 2, die bei einem Ultraschall-Durchflussmesser üblicherweise vorhanden ist, geringfügig ändern würde. Eine solche Distanzänderung hätte Auswirkungen auf die Messgenauigkeit. Durch die beschriebene Anordnung des Distanzrings 10 lässt sich dies verhindern, so dass mit dieser einfachen Maßnahme die Messgenauigkeit verbessert wird. Diese Lösung ist also vorteilhaft gegenüber allen bekannten Lösungen, bei denen das Wandlerelement 2 an einer Membran befestigt ist, so etwa gemäß EP-B1-0 606 536.

Der Distanzring 10 besteht auch in diesem Fall vorteilhaft aus Polyaryletherketon, weil dieser Werkstoff nichtleitend ist, so dass der Distanzring 10 durchaus die beiden Elektroden des Wandlerelements 2 teilweise bedecken kann. Die Dicke des Distanzrings 10 ist im übrigen so bemessen, dass nach dem Anbringen des Halterings die Formdichtung 6 beidseits des Wandlerelements 2 unter Druck steht, so dass sich genügende Dichtflächen ergeben.

Durch die lediglich ringförmige Auflage des Wandlerelements 2 auf dem Distanzring 10 kann das Wandlerelement 2 frei schwingen. Dies dient der Verbesserung des elektro-akustischen Wirkungsgrads.

Die erfindungsgemäße Lösung ermöglicht die Schaffung von Wandlern mit besonders geringen Herstellungs- und Montagekosten. Gleichzeitig wird ein besserer elektro-akustischer Wirkungsgrad gegenüber dem bekannten Stand der Technik erreicht, weil eine das Wandlerelement 2 vor dem Medium schützende Membran nicht erforderlich ist. Das gilt auch hinsichtlich der bei dieser Lösung fehlenden Klebstoffschichten. Deren dämpfende Wirkung entfällt ebenfalls.

## Patentansprüche

1. Wandler für einen Ultraschall-Durchflussmesser, enthaltend ein in einem Wandlergehäuse (1) angeordnetes Wandlerelement (2) mit einer dem Medium zugewandten Frontelektrode (21) und einer Rückelektrode (22), die auf einer Keramikscheibe (20) aufgebracht sind, wobei Dichtungsmittel vorhanden sind, durch die das Eindringen des Mediums in das Wandlergehäuse (1) verhinderbar ist, **dadurch gekennzeichnet, dass** das Wandlerelement (2) an seiner Mantelfläche und an den äußeren Partien seiner Frontseite und Rückseite von einer gummielastischen Formdichtung (6) umgeben ist.

2. Wandler nach Anspruch 1, **dadurch gekennzeichnet, dass** die Formdichtung (6) beidseits des Wandlerelements (2) Verdickungen (30) aufweist.

3. Wandler nach Anspruch 2, **dadurch gekennzeichnet, dass** die Formdichtung (6) an ihrem äußeren Umfang eine umlaufende Wulst (32) aufweist, deren Durchmesser etwa annähernd gleich groß ist wie der Innendurchmesser des Wandlergehäuses (1) im Bereich der Position des Wandlerelements (2).

4. Wandler nach Anspruch 3, **dadurch gekennzeichnet, dass** zwischen einer Stufe (7) des Wandlergehäuses (1) und der Formdichtung (6) ein Distanzring (10) angeordnet ist.

5. Wandler nach Anspruch 3, **dadurch gekennzeichnet, dass** zwischen einer Stufe (7) des Wandlergehäuses (1) und dem Wandlerelement (2) ein Distanzring (10) angeordnet ist.

6. Wandler nach Anspruch 4 oder 5, **dadurch gekennzeichnet, dass** auf dem Wandlergehäuse (1) ein Haltering (8) befestigbar ist, wobei das Wandlerelement (2) zwischen der Stufe (7) und dem Haltering (8) angeordnet ist.

7. Wandler nach Anspruch 6, **dadurch gekennzeichnet, dass** zwischen dem Haltering (8) und der Formdichtung (6) ein Gleitring (9) angeordnet ist.

8. Wandler nach Anspruch 7, **dadurch gekennzeichnet, dass** Distanzring (10) und Gleitring (9) aus Polyaryletherketon bestehen.

9. Wandler nach einem der Ansprüche 6 bis 8, **dadurch gekennzeichnet, dass** der Haltering (8) auf das Wandlergehäuse (1) aufschraubbar ist.

10. Wandler nach einem der Ansprüche 6 bis 8, **dadurch gekennzeichnet, dass** der Haltering (8) auf das Wandlergehäuse (1) aufpressbar ist.

11. Wandler nach einem der Ansprüche 1 bis 10, **dadurch gekennzeichnet, dass** auf der dem Medium zugewandten Frontelektrode (21) des Wandlerelements (2) eine Schutzschicht (23) aufgebracht ist, die aus einem Hartstoff besteht.

12. Wandler nach Anspruch 11, **dadurch gekennzeichnet, dass** der Hartstoff Titannitrid ist.

13. Wandler nach Anspruch 12, **dadurch gekennzeichnet, dass** das Titannitrid eine sogenannte geschlossene Struktur aufweist.

14. Wandler nach Anspruch 13, **dadurch gekennzeichnet, dass** die Dicke der Schutzschicht (23) 1 bis 5 µm beträgt.

## Claims

1. Transducer for an ultrasonic flowmeter, comprising a transducer element (2), which is disposed in a transducer housing (1), with a front electrode (21), which faces the medium, and a rear electrode (22), which is applied to a ceramic disc (20), wherein sealing means are provided, through which means the penetration of the medium into the transducer housing (1) can be prevented, **characterised in that** the transducer element (2) is surrounded by an elastomeric profiled seal (6) at its circumferential surface and at the outer parts of its front side and rear side.

2. Transducer according to Claim 1, **characterised in that** the profiled seal (6) has thickenings (30) on both sides of the transducer element (2).

3. Transducer according to Claim 2, **characterised in that** the profiled seal (6) has an all-round bead (32) at its outer circumference, the diameter of which bead is approximately of the same size as the inside diameter of the transducer housing (1) in the region of the position of the transducer element (2).

4. Transducer according to Claim 3, **characterised in that** a spacer ring (10) is disposed between a step (7) of the transducer housing (1) and the profiled seal (6).

5. Transducer according to Claim 3, **characterised in that** a spacer ring (10) is disposed between a step (7) of the transducer housing (1) and the transducer element (2).

6. Transducer according to Claim 4 or 5, **characterised in that** a retaining ring (8) can be fastened to the transducer housing (1), wherein the transducer element (2) is disposed between the step (7) and the retaining ring (8).

7. Transducer according to Claim 6, **characterised in that** a slip ring (9) is disposed between the retaining ring (8) and the profiled seal (6).

8. Transducer according to Claim 7, **characterised in that** the spacer ring (10) and the slip ring (9) consist of polyaryl ether ketone.

9. Transducer according to any one of Claims 6 to 8, **characterised in that** the retaining ring (8) can be screwed to the transducer housing (1).

10. Transducer according to any one of Claims 6 to 8, **characterised in that** the retaining ring (8) can be pressed onto the transducer housing (1).

11. Transducer according to any one of Claims 1 to 10, **characterised in that** a protective layer (23), which consists of a hard material, is applied to the front electrode (21), which faces the medium, of the transducer element (2).

12. Transducer according to Claim 11, **characterised in that** the hard material is titanium nitride.

13. Transducer according to Claim 12, **characterised in that** the titanium nitride has a so-called closed structure.

14. Transducer according to Claim 13, **characterised in that** the thickness of the protective layer is from 1 to 5 µm.

## Revendications

1. Transducteur pour un débitmètre à ultrasons, comprenant un élément transducteur (2) agencé dans un logement de transducteur (1) avec une électrode avant (21) orientée vers la substance et une électrode arrière (22) qui sont installées sur une plaque en céramique (20), des moyens d'étanchéité étant prévus à l'aide desquels la pénétration de la substance dans le logement de transducteur (1) peut être empêchée, **caractérisé en ce que** l'élément transducteur (2) est entouré sur la surface de son enveloppe et sur les parties extérieures de son côté avant et de son côté arrière par un joint d'étanchéité profilé en gomme élastique (6).

2. Transducteur selon la revendication 1, **caractérisé en ce que** le joint d'étanchéité profilé (6) présente des épaississements (30) sur les deux côtés de l'élément transducteur (2).

3. Transducteur selon la revendication 2, **caractérisé en ce que** le joint d'étanchéité profilé (6) présente sur son périmètre extérieur un renflement périphérique (32) dont le diamètre est approximativement d'une dimension identique au diamètre intérieur du logement de transducteur (1) dans la zone de la position de l'élément transducteur (2).

4. Transducteur selon la revendication 3, **caractérisé en ce qu'**une bague d'écartement (10) est agencée entre un échelon (7) du logement de transducteur (1) et le joint d'étanchéité profilé (6).

5. Transducteur selon la revendication 3, **caractérisé en ce qu'**une bague d'écartement (10) est agencée entre un échelon (7) du logement de transducteur (1) et l'élément transducteur (2).

6. Transducteur selon l'une quelconque des revendications 4 ou 5, **caractérisé en ce qu'**une bague de maintien (8) peut être fixée sur le logement de transducteur (1), l'élément transducteur (2) étant alors agencé entre l'échelon (7) et la bague de maintien (8).

7. Transducteur selon la revendication 6, **caractérisé en ce qu'**une bague de glissement (9) est agencée entre la bague de maintien (8) et le joint d'étanchéité profilé (6).

8. Transducteur selon la revendication 7, **caractérisé en ce que** la bague d'écartement (10) et la bague de glissement (9) sont constituées de polyaryléthercétone.

9. Transducteur selon l'une quelconque des revendications 6 à 8, **caractérisé en ce que** la bague de maintien (8) peut être fixée par vissage sur le logement de transducteur (1).

10. Transducteur selon l'une quelconque des revendications 6 à 8, **caractérisé en ce que** la bague de maintien (8) peut être fixée par pression sur le logement de transducteur (1).

11. Transducteur selon l'une quelconque des revendications 1 à 10, **caractérisé en ce qu'**une couche de protection (23), qui est constituée d'une substance dure, est installée sur l'électrode avant (21) orientée vers la substance de l'élément transducteur (2).

12. Transducteur selon la revendication 11, **caractérisé en ce que** la substance dure est le nitrure de titane.

13. Transducteur selon la revendication 12, **caractérisé en ce que** le nitrure de titane présente une structure dite fermée.

14. Transducteur selon la revendication 13, **caractérisé en ce que** l'épaisseur de la couche de protection (23) est comprise entre 1 et 5 µm.
